# EUROPÄISCHE PATENTANMELDUNG

(11) **EP 0 607 575 A1**
(43) Veröffentlichungstag der Anmeldung: **27.07.1994**
(21) Anmeldenummer: 93120206.3
(22) Anmeldetag: 15.12.1993
(51) Int. Cl.: B62D 29/04, B62D 33/02

(54) **Bausatz für Kofferaufbauten**

(30) Priorität: 21.01.1993 DE 4301571; 25.05.1993 DE 4317376
(71) Anmelder: Kögel Fahrzeugwerke Aktiengesellschaft, D-89016 Ulm (DE)
(72) Erfinder: Strobel, Georg, D-89079 Ulm-Wiblingen (DE); Häge, Walter, D-89081 Ulm (DE)
(74) Vertreter: Kohlmann, Karl Friedrich, Dipl.-Ing.

(57) **Zusammenfassung**

Die Erfindung betrifft einen Bausatz zur Herstellung eines Kofferaufbaues, insbesondere für Lastkraftfahrzeuge, Anhänger, Sattelauflieger oder dergleichen, in Klebetechnik und ein Verfahren zur Herstellung eines derartigen Kofferaufbaues. Um einen neuartigen Bausatz zu schaffen, mit dem die Herstellung von Kofferaufbauten ohne Transport- und Handhabungsprobleme auf einfache und kostengünstige Weise möglich zu machen, wird ein Bausatz vorgeschlagen, der Wandelemente (21) für die Wände (8,9) und Decken (12) mit einer maximalen Breite von etwa 1,5 m, Bodenwandelemente (20) mit einer maximalen Breite von etwa 1,5 m und Einfassprofile zur Klebeverbindung der aus den Wand- bzw. Boden- und Deckenwandelementen gebildeten Wand-, Decken- oder Bodeneinheit umfasst.

## Beschreibung

Die Erfindung betrifft einen Bausatz zur Herstellung eines Kofferaufbaues, insbesondere für Lastkraftwagen, Anhänger, Sattelauflieger oder dergleichen, sowie ein Verfahren zur Herstellung eines derartigen Kofferaufbaues.

Kofferaufbauten der hier zur Diskussion stehenden Art werden bisher in folgender Weise hergestellt:

In einem ersten Schritt werden großflächige Wand-, Decken- und Bodeneinheiten in den endgültigen Abmessungen erstellt oder vorgefertigte kleinflächige Wandelemente über Falt-, Klammer-, Steck- oder andere Verbindungen zu einer kompletten Wand-, Decken- oder Bodeneinheit mit den gewünschten endgültigen Abmessungen verbunden.

Die in dieser Weise gebildeten, bereits die endgültigen Abmessungen (z. B. 4 bis 13 Meter Länge) aufweisenden Wand-, Decken- und Bodeneinheiten werden dann in einem zweiten Schritt verladen und zum Bausatzverarbeiter transportiert, der dann unter Verwendung dieser Teile die beschriebenen Kofferaufbauten in ihrer endgültigen Form herstellt. Zu solchen Bausatzverarbeitern zählen beispielsweise Karosseriebaubetriebe oder dergleichen.

Der Transport der Wand-, Decken- und Bodeneinheiten zu diesen Bausatzverarbeitern bereitet zum Teil erhebliche Probleme, da die Einheiten sehr sperrig und zur Handhabung (Be- und Entladen) Krananlagen erforderlich sind. Für großflächige Einheiten sind sogar Hebe- bzw. Transportgestelle erforderlich, um Verformungen oder Beschädigungen beim Hebevorgang und Transport zu vermeiden. Darüberhinaus ist der Transport als solcher kostspielig, da die kompletten Einheiten in aller Regel nur mit Spezialtransportern und nicht mit herkömmlichen Lastkraftwagen befördert werden können. Beim Bausatzverarbeiter werden die Einheiten dann in einem dritten Schritt zu den Kofferaufbauten zusammengebaut. Auch hierzu sind Krananlagen erforderlich, da die Elemente nicht von Hand für den Aufbauvorgang gehandhabt werden können. Auch erfordert das Verkleben, Vernieten, Verschrauben o.dgl. derartiger großflächiger Einheiten besondere Vorkehrungen und spezielle Montage- und Spannvorrichtungen.

Aufgabe der vorliegenden Erfindung ist es, einen neuartigen Bausatz zu schaffen, mit dem die Herstellung von Kofferaufbauten der eingangs geschilderten Art ohne die oben geschilderten Transport- und Handhabungsprobleme auf einfache und kostengünstige Weise möglich ist.

Diese Aufgabe wird erfindungsgemäß mit einem Bausatz gelöst, der zumindest folgende Bauelemente umfasst:
- Wandelemente für die Wände und Decken mit einer maximalen Breite von ca. 1,2 m,
- Bodenwandelemente mit einer maximalen Breite von ca. 1,5 m, und
- Einfaßprofile zur Klebverbindung der aus den Wand- bzw. Boden- und Deckenwandelementen gebildeten Wand-, Decken- und Bodeneinheit.

Aufgrund der erfindungsgemäßen Ausgestaltung können die Teile des Bausatzes auf Paletten zusammengefaßt, von überall vorhandenen Gabelstaplern befördert und mit herkömmlichen Lastkraftwagen raumsparend transportiert werden. Kostenspielige Spezialtransporte sind deshalb nicht erforderlich.

Aufgabe der vorliegenden Erfindung ist es ferner, ein Verfahren zur Herstellung eines Kofferaufbaues, insbesondere für Lastkraftfahrzeuge, Anhänger, Sattelauflieger oder dergleichen zu schaffen, bei dem die Wand-, Decken-, und/ oder Bodeneinheiten jeweils aus Wand-, Decken- bzw. Bodenwandelementen hergestellt und unter Verwendung von Einfassprofilen in Klebetechnik zusammengebaut werden, bei dem der Zusammenbau eines Kofferaufbaues in einfacher und kostengünstiger Weise erfolgt, wobei eine Verwendung von Spezialtransporteinrichtungen und Krananlagen nicht notwendig ist.

Diese Aufgabe wird erfindungsgemäß dadurch gelöst, daß kleinflächige Bodenwandelemente nacheinander zur Bildung der Bodeneinheit zusammengereiht, danach kleinflächige Wandelemente zur Bildung der Seiten- und Stirnwandeinheit aufgesetzt und mit den Bodenwandelementen verbunden, im Anschluß daran kleinflächige Deckenwandelemente aufgelegt und abschließend Tür- oder Rolltorportale eingesetzt werden.

Bei der Herstellung der Kofferaufbauten beim Bausatzverarbeiter (Karosseriebauer) nach diesem erfindungsgemäßen Verfahren können wiederum die Teile des erfindungegemäßen Bausatzes einfach und ohne Einsatz von Krananlagen und speziellen Montage- und Spannvorrichtungen gehandhabt werden.

Bei einer Weiterbildung des erfindungsgemäßen Bausatzes ist in vorteilhafter Weise ein Grundrahmen vorgesehen, der aus zusammensetzbaren Längsträgern, Querträgern und Befestigungsvorrichtungen besteht. Dieser Grundrahmen kann in einfacher Weise auf den Fahrzeugrahmen des Lastkraftwagens oder des Anhängers montiert werden und stellt somit die Verbindung zwischen dem Fahrzeugrahmen und dem Kofferaufbau dar. Hierbei ist es besonders vorteilhaft, daß der Grundrahmen an die verschiedenen Fahrzeugrahmen der verschiedenen Fahrzeughersteller anpassbar ist, so daß der erfindungsgemäße Bausatz auf jeden Fahrzeugrahmen montierbar ist.

Die Befestigung des Grundrahmens auf dem Fahrzeugrahmen erfolgt in besonders einfacher Weise dadurch, daß die Befestigungsvorrichtung als Konsolen ausgebildet sind, die an den Längsträgern und/oder Querträgern anschraubbar sind und eine Verbindung zwischen Fahrzeugrahmen und Grundrahmen herstellen. Es ist bei einer Weiterentwicklung des erfindungsgemäßen Bausatzes vorgesehen, daß in den Längsträgern und/oder Querträgern mindestens eine Lochreihe mit einer Vielzahl von in gleichen Abständen angeordneten Löchern angeordnet ist. Durch diese Ausgestaltung (Lochraster; Viellochsystem) können die als Konsolen ausgebildeten Befestigungsvorrichtungen in einfacher Weise an verschiedenen Stellen der Längsträger und/oder der Querträger befestigt werden, so daß eine sehr große Kompatiblität zwischen dem Grundrahmen des Bausatzes und den Fahrzeugrahmen verschiedener Fahrzeughersteller erzielt wird. Es ist dann nämlich möglich, die Konsolen auf das Fahrgestell abgestimmt an den Längsträgern bzw. an den Querträgern des Grundrahmens zu befestigen.

Auf den Grundrahmen werden nachfolgend die Bodenwandelemente angeordnet. Die Bodenwandelemente habem vorzugsweise an ihren gegenüberliegenden Kanten korrespondierende Befestigungsvorrichtungen, so daß sie in einer Art Stecksystem oder dergleichen zusammenfügbar sind und eine glattflächige Bodenplatte bilden. Die Bodenwandelemente sind vorzugsweise als Sandwichplatten ausgebildet, die aus zumindest einer Abdeckplatte bestehen, die auf einer Kernplatte befestigt ist. Vorzugsweise werden Sandwichplatten verwendet, die aus einem Kunststoff- oder Holzkern bestehen, auf dem beidseitig eine Leichtmetall- oder Kunststoffplatte aufgebracht ist. Die Sandwichplatte kann aber auch dadurch gebildet sein, daß ein zwischen zwei Platten gebildeter Hohlraum mit einem Kunststoff ausgeschäumt ist.

Bei einer Weiterentwicklung des Bausatzes weisen die Bodenwandelemente an ihren gegenüberliegenden Kanten eine Profilleiste auf, die vorzugsweise aus Kunststoff oder Holz besteht. Bei dieser Ausgestaltung ist es vorteilhaft, daß die Kernplatte bei der Montage durch die Profilleiste geschützt ist. Es werden auf diese Weise Beschädigungen an der Kernplatte und auch an den Abdeckplatten verhindert. Darüberhinaus ist die Produktion der einzelnen Bodenwandelemente mit korrespondierenden Befestigungsvorrichtungen kostengünstiger, wenn die korrespondierenden Befestigungsvorrichtungen in den Profilleisten angeordnet sind.

Eine besonders einfache Verbindung zwischen benachbarten Bodenwandelementen ist dadurch erzielbar, daß die Abdeckplatte derart auf der Kernplatte angeordnet ist, daß die Abdeckplatte die erste Kante der Kernplatte und/oder der Profilleiste überragt und an der gegenüberliegenden zweiten Kante der Kernplatte derart zurückgesetzt ist, daß sie zusammen mit der Kernplatte und/oder der Profilleiste einen Absatz bildet. Bei dieser Ausgestaltung weist jedes Bodenelement demzufolge auf einer Kante eine hervorstehende Abdeckplatte und auf der gegenüberliegenden Kante einen Absatz auf, der mit dem hervorstehenden Teil der Abdeckplatte korrespondiert. Bei dem Zusammenbau benachbarter Bodenwandelemente werden dann die Platten derart angeordnet, daß jeweils eine hervorstehende Abdeckplatte in dem Absatz des benachbarten Bodenwandelementes zur Anlage kommt. Auf diese Weise wird ein glattflächiger Boden erzielt. Darüberhinaus ist es bei dieser Ausgestaltung vorteilhaft, daß durch die überlappung der benachbarten Bodenwandelemente ein dichter Abschluß erzielt wird, der beispielsweise auch dann von Vorteil ist, wenn der Kofferaufbau aus sogenannten Isolierelementen hergestellt und für den Transport temperaturgeführter Ware geeignet ist. In diesem Fall wird durch das Überlappen der Bodenwandelemente eine direkte Wärmebrücke und Schwitzwasserbildung im Befestigungsbereich verhindert.

Eine einfache Befestigung der Bodenwandelemente auf dem Grundrahmen wird dadurch erzielt, daß die Bodenwandelemente Einsenkungen für Befestigungselemente haben. Vorzugsweise sind diese Einsenkungen in den Profilierungen angeordnet und es werden als Befestigungselemente Schrauben mit einem hammerartigen Kopf verwendet. Durch diese Ausgestaltung wird eine einfache aber feste Verbindung zwischen den Bodenwandelementen und dem Grundrahmen erzielt, wobei der hammerartige Kopf der Schrauben zu einer großflächigen Verteilung des durch die Verschraubung entstehenden Drucks auf die Profilleisten führt. Die Profilleisten weisen demzufolge Bohrungen auf, durch die die Schrauben steckbar sind. Neben diesen voranstehend genannten Vorteilen dieser erfindungsgemäßen Ausbildung des Bausatzes wird weiterhin der Vorteil erzielt, daß auf diese Art und Weise ein glattflächiger Boden erzielbar ist, der zum einen gut mit Flurförderern, wie Gabelstaplern oder dergleichen befahrbar ist und zum anderen eine sichere Ablage von Ladegut, wie beispielsweise Kartonagen gewährleistet.

Es hat sich ferner als vorteilhaft erwiesen, die Einsenkungen derart auszubilden, daß ihre Tiefe und Länge größer als die Abmessungen des hammerartigen Kopfes sind. Somit können durch diese Ausgestaltungen alle Rahmenabstände bedingt durch differenzierte Fahrgestellfabrikate usw. abgedeckt werden.

Bei einer weiteren vorteilhaften Ausgestaltung des erfindungsgemäßen Bausatzes ist vorgesehen, daß die Bodenwandelemente an einer Kante einen plattenartigen Ansatz und an ihrer gegenüberliegenden Kante eine mit dem Ansatz korrespondierende Einsenkung haben. Diese als Falzfügung und Ansatz ausgebildeten Konstruktionselemente ermöglichen eine großflächige Klebeverbindung benachbarter Bodenwandelemente. Darüberhinaus wird durch diese Ausgestaltung eine Vereinfachung der Montage erzielt, da Falzfügung und Ansatz eine Führung benachbarter Bodenwandelemente beim Zusammenbau bilden.

Um einen Versatz benachbarter Bodenwandelemente im Fügebereich zu verhindern, ist nach einem weiteren Merkmal der Erfindung vorgesehen, daß die Bodenwandelemente an einer Kante zumindest einen Zapfen und an ihrer gegenüberliegenden Kante eine mit dem Zapfen korrespondierende Öffnung haben. Diese Ausgestaltung dient dazu, daß die Bodenwandelemente bei ihrer Montage in bündiger Ausrichtung angeordnet werden und während des Aushärtens des zwischen den Elementen angeordneten Klebstoffs nicht verschoben werden können.

Die Wandelemente für die Wände und die Decke des aus dem Bausatz herstellbaren Kofferaufbaus haben an ihren gegenüberliegenden Längskanten vorzugsweise korrespondierende Verbindungsprofilierungen, die eine Schnappverbindung zweier benachbarter Wandelemente ermöglichen.

Vorzugsweise hat jedes Wandelement an einer Längskante eine Aufnahme mit zwei Schenkeln und an der gegenüberliegenden Längskante eine mit der Aufnahme korrespondierende Stegleiste. Es hat sich als besonders vorteilhaft herausgestellt, die Aufnahme im Querschnitt u-förmig auszubilden.

Eine besonders einfache Konstruktion der Stegleiste ergibt sich dadurch, daß die Stegleiste durch eine Verringerung der Dicke des Wandelementes gebildet ist. Hierbei kann demzufolge auf die Montage spezieller Stegleisten an einzelnen Wandelementen verzichtet werden. Derartige Stegleisten können beispielsweise die Form eines Profils aus Holz, Kunststoff oder Leichtmetall haben.

Eine Verbesserung der Verbindung zwischen benachbarten Wandelementen wird dadurch erzielt, daß die Schenkel an ihrem freien Ende eine Wulst haben, welche in entsprechende Ausnehmungen der Stegleiste einschnappen. Derart ausgebildete Wandelemente bieten den Vorteil, daß das richtige Zusammenfügen benachbarter Wandelemente durch ein Einschnappen der Wulst in die entsprechende Ausnehmung akustisch und optisch wahrnehmbar ist. Ferner wird hierdurch ein erster Halt erzielt, der eine nachfolgende Befestigung der benachbarten Wandelemente miteinander erleichtert.

Die Verbindung zwischen den benachbarten Wandelementen wird vorzugsweise als Klebeverbindung ausgebildet. Um eine ausreichende Menge Klebemittel zwischen benachbarten Wandelementen anzuordnen, hat es sich gemäß einem weiteren Merkmal der Erfindung als vorteilhaft erwiesen, daß sich die Stegleiste zumindest in einem Teilbereich seines freien Endes verjüngt, so daß zwischen der Stegleiste und den Schenkeln ein Hohlraum angeordnet ist. Dieser Hohlraum kann dann vollständig mit Klebemitteln ausgefüllt werden. Ein weiterer Vorteil dieser Ausgestaltung ist darin zu sehen, daß durch die Verjüngung der Stegleiste das Einführen der Stegleiste in die Aufnahme des benachbarten Wandelementes erleichtert wird.

In einer zweiten Ausführungsform der Wandelemente ist vorgesehen, daß die Stegleiste und die Aufnahme im Querschnitt im wesentlichen V-förmig ausgebildet sind. Auch diese Ausbildung hat den Vorteil, daß das Zusammenfügen benachbarter Wandelemente vereinfacht ist.

Grundsätzlich können die Aufnahme und die Stegleiste in verschiedenster Weise ausgebildet sein. Bei einem bevorzugten Ausführungsbeispiel ist jedoch die Aufnahme als durchlaufende, hinterschnittene Nut ausgebildet und die Stegleiste mit einem in die Hinterschneidung eingreifenden, verbreiterten Kopfteil ausgestattet. Eine derartige Nut/Feder-Anordnung eignet sich besonders gut zur Herstellung einer Schnappverbindung. Wird eine derartige Ausgestaltung mit Wandelementen realisiert, bei denen auf eine Kernplatte zu beiden Seiten eine Abdeckplatte aufgesetzt ist, ist es besonders vorteilhaft, wenn die Abdeckplatten derart in den Bereich der hinterschnittenen Nut sowie in den Bereich der Stegleiste hineingezogen werden, daß sie zumindest teilweise die Wandung der Nut und die Wandung der Stegleiste einschließlich Kopfteil bilden. Bei einer derartigen Ausgestaltung können die korrespondierenden Verbindungselemente auf einfache Weise abkanttechnisch hergestellt werden, so daß walztechnische Verfahrensweisen nicht erforderlich sind.

Die Verbindung der Wandelemente für die Wände mit den Wandelementen für die Decke und den Bodenwandelementen erfolgt in vorteilhafter Weise durch Verschrauben, Vernieten oder Verkleben.

Es ist schließlich bei einem erfindungsgemäßen Bausatz vorgesehen, daß zwischen den Wandelementen für die Wände und den Wandelementen für die Decke und/oder zwischen den Wandelementen für Wände und den Bodenwandelementen Profilleisten angeordnet sind, die eine Montage dieser Bauteile erleichtern.

Bei einer Weiterbildung des erfindungsgemäßen Bausatzes ist es vorgesehen, daß die Profilleisten zwei im wesentlichen u-förmig ausgebildete Aufnahmen mit jeweils zwei Schenkeln haben, die l-förmig zueinander angeordnet sind, wobei in die erste Aufnahme die Wandelemente für die Wände und in die zweite Aufnahme die Wandelemente für die Decke eingesteckt sind. Diese Ausbildung der Profilleisten ermöglicht eine feste Verbindung der einzelnen Wandelemente sowie eine einfache Montage des erfindungsgemäßen Bausatzes. Hierbei ist es besonders vorteilhaft, daß durch die Ausbildung der Profilleisten Wärmebrücken im wesentlichen ausgeschlossen sind und daß die einzelnen Wandelemente für die Wände über eine gemeinsame Profilleiste miteinander und mit den Wandelementen der Decke verbunden sind. Die Montage der Profilleisten bzw. der Wandelemente erfolgt dabei in der Art, daß die Profilleiste, nachdem die Wandelemente für die Wände an den Bodenwandelementen befestigt sind, über die auf die den Bodenwandwelementen abgewandte Schmalseite der Wandelemente der Wände die Profilleiste gesteckt wird, wonach nachfolgend die Wandelemente für die Decke in die Profilleiste eingehängt werden. Die Wandelemente der Wände und die Wandelemente der Decke werden miteinander verklebt, wobei der Klebstoff entweder vor dem Einstecken der einzelnen Wandelemente oder nach dem Einstecken der einzelnen Wandelemente in die Profilleiste eingebracht wird.

Es ist bei einem erfindungsgemäßen Bausatz ferner vorgesehen, daß bei einer ersten Ausführungsform der Abstand der Schenkel der Aufnahme für die Wandelemente der Wände geringer ist als der Abstand der Schenkel der Aufnahme für die Wandelemente der Decke. Durch diese Ausbildung können beispielsweise Wandelemente für die Decke mit einer geringeren Stärke verwendet werden, um das Gewicht des gesamten Kofferaufbaus zu verringern, ohne auf die notwendige Festigkeit des Kofferaufbaus zu verzichten. Ferner können je nach Qualitätsanforderung in bezug auf die Isolierung des Kofferaufbaus unterschiedlich dicke Wandelemente mit den gleichen Profilen zusammengefügt werden. Bei einer alternativen Ausgestaltung des erfindungsgemäßen Bausatzes ist vorgesehen, daß der Abstand der Schenkel der Aufnahme für die Wandelemente der Wände gleich groß ist wie der Abstand der Schenkel der Aufnahme für die Wandelemente der Decke. Diese Ausgestaltung hat insbesondere den Vorteil, daß der Kofferaufbau aus im wesentlichen gleichen Wandelementen für Decke und Wände besteht.

Eine größere Stabilität des Kofferaufbaus und eine Erleichterung der Verarbeitung der einzelnen Wandelemente wird dadurch erzielt, daß die auf den die Außenseiten des Kofferaufbaus bildenden Flächen der Wandelemente aufliegenden Schenkel länger ausgebildet sind als die auf den die Innenseiten des Kofferaufbaus bildenden Flächen der Wandelemente aufliegenden Schenkel. Hierdurch ist es in einfacher Weise möglich, die einzelnen Wandelemente in die Aufnahmen der Profilleisten einzuführen, wobei die Wandelemente beispielsweise zuerst an den längeren Schenkel angelegt und anschließend in die Aufnahme eingeschoben werden.

Zur Verbindung der Wandelemente mit den Profilleisten ist es nach einem weiteren Merkmal der Erfindung vorgesehen, daß die Schenkel auf ihren den Wandelementen zugewandten Flächen Ausnehmungen haben, die mit Klebemitteln befüllbar sind. Hierdurch wird eine sichere Verbindung zwischen den Profilleisten und den Wandelementen erzielt. Die Ausnehmungen können dabei als über die gesamte Länge der Profilleiste verlaufenden Nut oder als einzelne, im gleichen Abstand zueinander beabstandete Aufnahmen ausgebildet sein. Das Einfüllen der Klebemittel erfolgt vor dem Zusammenfügen von der Profilleiste mit den Wandelementen.

Eine weitere Befestigung der Profilleisten an den Wandelementen wird in einfacher Weise dadurch erzielt, daß die Schenkel Bohrungen aufweisen, in welche Befestigungsmittel, wie beispielsweise Schrauben, Niete oder dergleichen steckbar sind. Hierbei hat es sich als vorteilhaft erwiesen, die Bohrungen in Einsenkungen in den Schenkeln anzuordnen, um eine möglichst glatte Außenfläche des Kofferaufbaus zu erzielen.

Um ein lagegenaues Anordnen der Wandelemente in den Profilleisten zu gewährleisten und somit die Montage des Bausatzes zu vereinfachen, ist nach einem weiteren Merkmal der Erfindung vorgesehen, daß in den Aufnahmen zwischen den Schenkeln Anschläge angeordnet sind. Bei der Montage der Wandelemente werden diese Wandelemente soweit in die Aufnahmen geschoben, bis die Schmalkante der Wandelemente an dem entsprechenden Anschlag in der Profilleiste anliegt.

Eine weitere Vereinfachung der Montage und eine weitere Erhöhung der Festigkeit des Kofferaufbaus wird insbesondere dadurch erzielt, daß in den Aufnahmen zwischen den Schenkeln im wesentlichen l-förmig ausgebildete, zwei Stege aufweisende Winkelelemente angeordnet sind, wobei ein Steg rechtwinklig zu den Schenkeln und ein Steg im wesentlichen parallel zu den Schenkeln verläuft, um Fixierungsvorrichtungen zu bilden, die mit korrespondierenden Zungen zusammenwirken, die an den parallel zu den Profilleisten angeordneten Schmalflächen der Wandelemente angeordnet sind. Bei einer derart ausgebildeten Profilleiste und einem derart ausgebildeten Wandelement kann die Profilleiste mit einer sehr großen Genauigkeit in das Wandelement eingehängt werden, bevor beispielsweise das Wandelement der Decke in die zweite Aufnahme der Profilleiste eingeschoben wird. Demzufolge wird hierdurch die Montage des Kofferaufbaus dadurch vereinfacht, daß die Profilleiste lagegenau an den Wandelementen mit den korrespondierenden Zungen fixiert wird. Ferner wird durch diese Ausgestaltung des erfindungsgemäßen Bausatzes die Festigkeit des aus dem erfindungsgemäßen Bausatz hergestellten Kofferaufbaus vergrößert, da die im Reibschluß aneinanderliegenden Flächen bzw. die Klebeflächen zwischen der Profilleiste und den Wandelementen vergrößert sind.

Eine aerodynamisch günstige Form des aus dem erfindungsgemäßen Bausatz montierten Kofferaufbaus und eine hohe Stabilität der Profilleisten wird nach einem weiteren Merkmal der Erfindung dadurch erzielt, daß die Aufnahmen über einen außenliegenden Steg miteinander verbunden sind, der an den auf den Außenseiten des Kofferaufbaus aufliegenden Schenkeln unter einem Winkel angrenzt, schräg verläuft und einen Hohlraum zwischen den Aufnahmen abdeckt. Die im Bereich der Eckverbindung zwischen den Aufnahmen und dem Steg entstehenden Freiräume werden nach einem weiteren Merkmal der Erfindung ausgeschäumt oder gemäß einer weiteren Ausgestaltung der Erfindung mit Profilschaumstücken ausgefüllt. Hierdurch werden wiederum Wärmebrücken vermieden und eine große Stabilität des Kofferaufbaus erzielt, da zumindest das Ausschäumen des Hohlraumes zu weiteren Kontaktflächen zwischen den Wandelementen der Decke und den Wandelementen der Wände führt.

Eine weitere Vereinfachung der Montage des aus dem erfindungsgemäßen Bausatzes hergestellten Kofferaufbaus wird dadurch erzielt, daß die Schenkel an ihren freien Enden und an den den Aufnahmen zugewandten Flächen abgeschrägt sind, wodurch das Einführen der Wandelemente in die Aufnahmen auch bei paßgenauem Sitz leicht auszuführen ist. Schließlich hat es sich als vorteilhaft erwiesen, die Profilleisten aus Aluminium zu fertigen, um Korrosionsprobleme zu vermeiden und das Gesamtgewicht des Kofferaufbaus möglichst gering zu halten.

Bei einer Weiterentwicklung des erfindungsgemäßen Verfahrens ist vorgesehen, daß die Bodenwandelemente in einem weiteren Verfahrensschritt auf einem Grundrahmen befestigt werden, der mit dem Fahrzeugrahmen verbunden wird. Schließlich ist es bei einem weiteren Verfahrensschritt des erfindungsgemäßen Verfahrens vorgesehen, daß die Bodenwandelemente mit dem Grundrahmen verschraubt werden.

Weitere Einzelheiten und Vorteile des erfindungsgemäßen Bausatzes ergeben sich aus der nachfolgenden Beschreibung der zugehörigen Zeichnung, in der bevorzugte Ausführungsformen des erfindungsgemäßen Bausatzes dargestellt sind. In der Zeichnung zeigt:
- Figur 1: einen Lastkraftwagen mit einem Kofferaufbau in Seitenansicht;
- Figur 2: einen Teilquerschnitt durch einen Eckpunkt zwischen einer Seitenwand und einer Bodenwand des Kofferaufbaues gemäß Figur 1;
- Figur 3: eine teilweise geschnittene Seitenansicht des Rahmens gemäß Figur 2 entlang der Schnittlinie III-III in Figur 2;
- Figur 4: einen perspektivisch dargestellten Ausschnitt einer Bodenwand eines Kofferaufbaues gemäß den Fig. 1 und 2
- Figur 5: eine Seitenansicht einer Verbindungsstelle zwischen zwei Bodenwandelementen;
- Figur 6: eine perspektivisch dargestellte Ansicht einer Kante des Bodenwandelementes gemäß Figur 5;
- Figur 7: eine erste Ausführungsform eines Wandelementes, im Schnitt;
- Figur 8: zwei zusammengefügte Wandelemente gemäß Figur 7, im Schnitt;
- Figur 9: eine zweite Ausführungsform eines Wandelementes, im Schnitt;
- Figur 10: zwei zusammengefügte Wandelemente gemäß Figur 9, im Schnitt;
- Figur 11: die Verbindung zwischen der Decke und einer Seitenwand in einer geschnittenen Seitenansicht;
- Figur 12: eine erste Ausführungsform der Verbindung zwischen einer Seitenwand und der Stirnwand in einer geschnittenen Draufsicht;
- Figur 13: eine zweite Ausführungsform der Verbindung zwischen der Stirnwand und einer Seitenwand in einer geschnittenen Draufsicht;
- Figur 14: die Verbindung zwischen der Decke und der Vorderwand in einer geschnittenen Seitenansicht; und
- Figur 15: ein drittes Ausführungsbeispiel eines Wandelementes, im Schnitt.

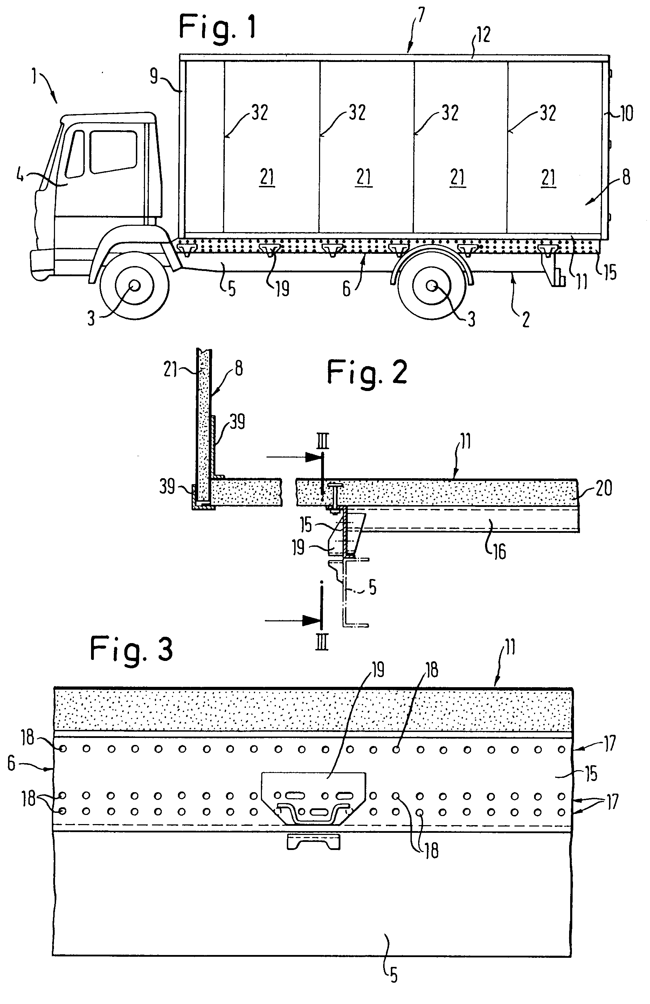

Ein in Figur 1 dargestellter Lastkraftwagen 1 besteht aus einem Fahrgestell 2 mit zwei Achsen 3 und einem am vorderen Ende des Fahrgestells 2 aufgesetzten Führerhaus 4. Das Fahrgestell 2 weist ferner einen Fahrzeugrahmen 5 auf, der aus zwei Längsträgern und mehreren Querträgern besteht. Auf dem Fahrzeugrahmen 5 ist ein Grundrahmen 6 montiert, dessen konstruktiver Aufbau im folgenden noch beschrieben wird. Auf diesem Grundrahmen 6 ist ein Kofferaufbau 7 aufgesetzt, der aus zwei Seitenwänden 8, einer Stirnwand 9, mindestens einer Türe 10 oder alternativ mindestens einem Rolltorportal, einem Boden 11 und einer Decke 12 besteht. Der Kofferaufbau ist aus sogenannten Sandwichplatten zusammengesetzt, die aus einer Kernplatte 13 und zumindest einer Abdeckplatte 14 aufgebaut sind.

Bei dem in Figur 1 dargestellten Lastkraftwagen ist der Kofferaufbau 7 mit dem Grundrahmen 6 verschraubt, wie es im folgenden noch beschrieben wird. Der Grundrahmen 6 besteht aus Längsträgern 15 und aus Querträgern 16, die mit den Längsträgern 15 verbunden sind. Die Verbindung zwischen den Längsträgern 15 und den Querträgern 16 kann durch Schrauben, Nieten oder Schweißen erfolgen.

In den Langsträgern 15 sind drei Lochreihen 17 mit einer Vielzahl von in gleichen Abständen zueinander angeordneten Löchern 18 vorhanden. An den Längsträgern 15 sind Konsolen 19 angeschraubt, mit denen der Grundrahmen 6 auf dem Fahrzeugrahmen 5 befestigt ist. Durch die Vielzahl von Löchern 18 in den Längsträgern 15 können die Konsolen an unterschiedlichen Stellen des Längsträgers 15 angeschraubt werden, wodurch der Grundrahmen 6 auf verschiedene Fahrzeugrahmen 5 verschiedener Lastkraftfahrzeugherstellern befestigbar ist. Der Grundrahmen 6 stellt somit die Verbindung des Kofferaufbaues 7 mit dem Lastkraftwagen 1 dar. Es ist hierbei besonders vorteilhaft, daß der Kofferaufbau unabhängig von dem Lastkraftwagentyp herstellbar ist, da die Anpassung des Kofferaufbaues 7 an den Lastkraftwagen 1 durch die besondere Konstruktion des Grundrahmens 6 mit den Konsolen 19 erfolgt.

Der Boden 11 des Kofferaufbaues 7 besteht aus mehreren Bodenwandelementen 20. Die Seitenwände 8, die Stirnwand 9 und die Decke 12 des Kofferaufbaues 7 bestehen aus mehreren Wandelementen 21, die im nachfolgenden in noch zu beschreibender Weise zusammengefügt sind. Sowohl die Bodenwandelemente 20 als auch die Wandelemente 21 sind gemeinsam mit den Teilen des Grundrahmens 6, nämlich den Längsträgern 15, den Querträgern 16 und den Konsolen 19 sowie den zugehörigen Befestigungsmitteln Teile eines Bausatzes zur Herstellung des Kofferaufbaues 7, wie er für Lastkraftwagen 1, Anhänger, Sattelauflieger oder dergleichen verwendbar ist. Die Bodenwandelemente 20 und die Wandelemente 21 für die Seitenwand 8, die Stirnwand 9 und die Decke 12 haben eine maximale Breite von etwa 1,5 m. Darüberhinaus weist auch die Tür 10 Einzelelemente auf, die jeweils eine maximale Breite von etwa 1,5 m haben. Zu dem Bausatz gehören dann noch Einfassprofile zur Klebeverbindung der aus den Wandelementen 21 und Bodenwandelementen 20 gebildeten Seitenwände 8, Stirnwand 9, Decke 12, Boden 11 und Tür 10.

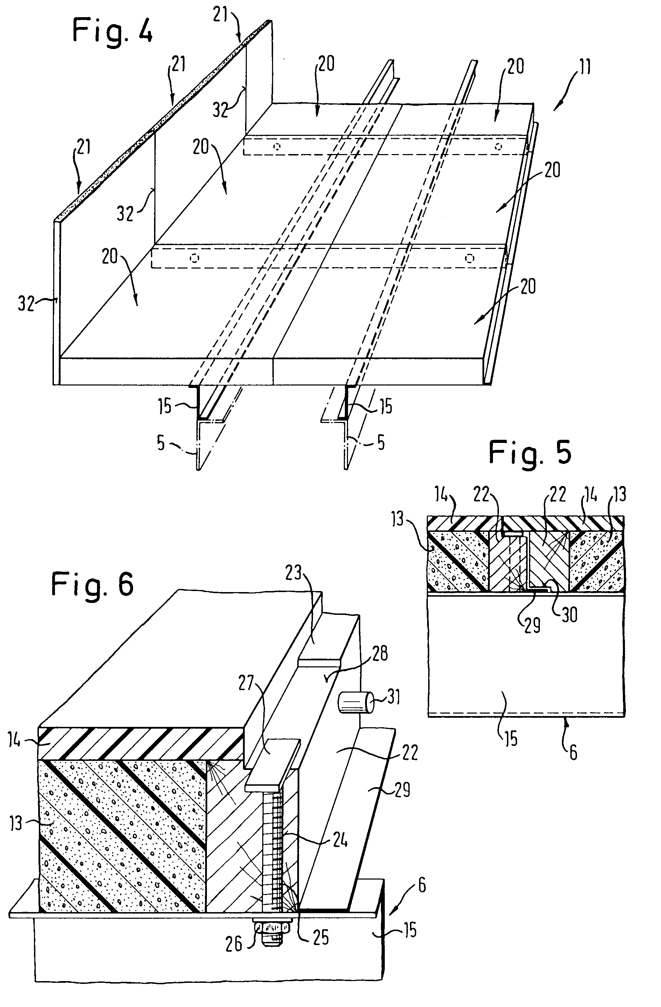

Die Bodenwandelemente 20 sind quaderförmig ausgebildet. In der Figur 4 ist ein Teil des Bodens 11 dargestellt, der aus mehreren aneinandergefügten Bodenwandelemente 20 besteht. Diese Bodenwandelemente 20 sind auf den Längsträgern 15 des Grundrahmens 6 befestigt, welcher wiederum auf dem Fahrzeugrahmen 5 verschraubt ist.

In der Figur 5 ist die Fügestelle zwischen zwei Bodenwandelementen 20 detailiert dargestellt. Es ist erkennbar, daß jedes Bodenwandelement 20 aus der Kernplatte 13, der Abdeckplatte 14 und zwei an gegenüberliegenden Kanten des Bodenwandelementes 20 verlaufenden Profilleisten 22 besteht. Die Abdeckplatte 14 ist derart auf der Kernplatte 13 angeordnet, daß sie die Profilleiste 22 an einer Kante des Bodenwandelementes 20 überragt und an der gegenüberliegenden Kante zusammen mit der zweiten Profilleiste 22 einen Absatz 23 bildet. Die Maße des Absatzes 23 stimmen dabei im wesentlichen mit dem die Profilleiste 22 auf der gegenüberliegenden Seite überragenden Teil der Abdeckplatte 14 überein.

Die Profilleisten 22 bestehen vorzugsweise aus einem Duroplasten, einem Hartholz oder aus Leichtmetall. Die Abdeckplatte 14 kann ebenfalls aus einem der drei vorgenannten Materialien bestehen. Die Kernplatte 13 besteht vorzugsweise aus einem aufgeschäumten Kunststoff, der entsprechend der Anforderungen an den Kofferaufbau ausgelegt ist.

Zur Befestigung der Bodenwandelemente 20 auf den Längsträgern 15 sind in den Profilleisten 22 Bohrungen 24 angeordnet, durch die Schrauben 25 gesteckt sind, welche die Bohrungen 24 und eine entsprechend im Längsträger 15 angeordnete Bohrung durchgreifen und an ihrem freien Ende eine Mutter 26 haben. Die Schrauben 25 haben einen hammerartigen Kopf 27, der in einer Einsenkung 28 in der Profilleiste 22 zur Anlage kommt. Die Tiefe der Einsenkung 28 entspricht der Dicke des hammerartigen Kopfes 27 der Schraube 25.

Die Profilleiste 22 einer Kante des Bodenwandelementes 20 weist darüberhinaus einen plattenartigen Ansatz 29 auf, der mit einer Einsenkung 30 in der Profilleiste 22 an der gegenüberliegenden Kante des Bodenwandelementes 20 korrespondiert. Diese als Falzfügung und Ansatz ausgebildeten Konstruktionselemente ermöglichen eine großflächige Klebeverbindung zwischen zwei benachbarten Bodenwandelementen 20. Schließlich weist jedes Bodenwandelement 20 in einer Profilleiste 22 mindestens einen Zapfen 31 auf, der mit einer Öffnung in der an der gegenüberliegenden Kante des Bodenwandelementes 20 angeordneten Profilleiste 22 korrespondiert. Diese zapfenartige Steckverbindung zwischen zwei benachbarten Bodenwandelementen 20 verhindert einen Versatz der benachbarten Bodenwandelemente im Fügebereich, während der zwischen den Bodenwandelementen 20 angeordnete Kleber aushärtet.

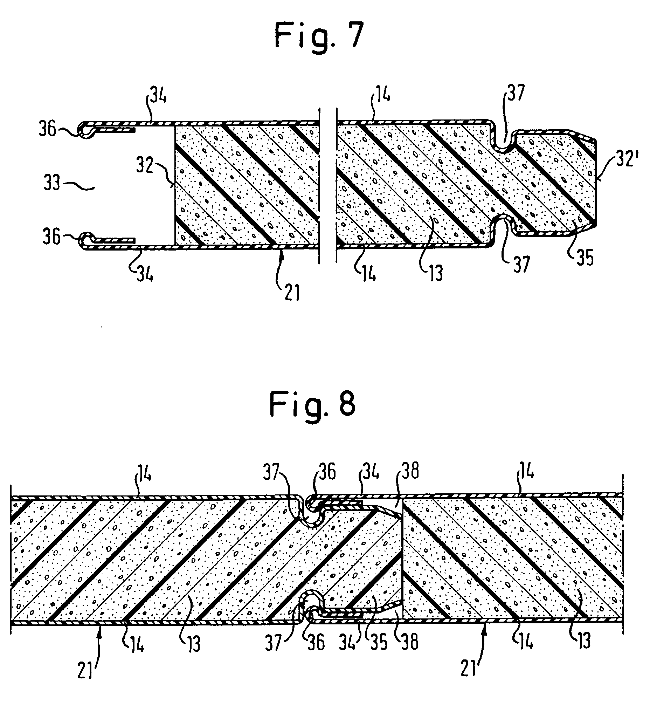

In den Figuren 7 bis 10 sind zwei Ausführungsbeispiele der Wandelemente 21 dargestellt. Die Wandelemente 21 für die Seitenwände 8, die Stirnwand 9 und die Decke 12 weisen an ihren gegenüberliegenden Längskanten 32, 32' korrespondierende Verbindungselemente auf, die eine Schnappverbindung zweier benachbarter Wandelemente 21 ermöglichen. Jedes Wandelement 21 hat an einer Längskante 32 eine Aufnahme 33 mit zwei Schenkeln 34 und an der gegenüberliegenden Längskante 32' eine mit der Aufnahme korrespondierende Stegleiste 35. Bei dem in den Figuren 7 und 8 dargestellten Ausführungsbeispiel ist die Aufnahme 33 im Querschnitt U-förmig ausgebildet.

Die Stegleiste 35 ist durch eine Verringerung der Dicke des Wandelementes 21 gebildet. Sie besteht ebenso wie das Wandelement 21 aus einer Kernplatte 13, die beidseitig jeweils eine Abdeckplatte 14 aufweist.

Die Schenkel 34 der Aufnahme 33 bestehen aus einem elastischen Material. Im dargestellten Ausführungsbeispiel sind die Schenkel 34 als Verlängerungen der Abdeckplatten 14 ausgebildet. Hieraus folgt, daß das Wandelement 21 im Bereich der Aufnahme 33 lediglich aus den beiden Abdeckplatten 14 besteht. Die Kernplatte 13 ist demnach in diesem Bereich zwischen den Abdeckplatten 14 entfernt.

Die Schenkel 34 haben an ihren freien Enden eine Wulst 36, die durch Umbördelung der Abdeckplatten 14 im Bereich der Schenkel 34 entsteht. Diese Wülste 36 schnappen in entsprechende Ausnehmungen 37 der Stegleiste 35 ein, wenn die Stegleste 35 eines Wandelementes 21 in die Aufnahme 33 des zu diesem benachbarten Wandelementes 21 eingeschoben wird.

Es ist in der Figur 7 erkennbar, daß sich der Zapfen 35 in einem Teilbereich seines freien Endes verjüngt, sodaß zwischen der Stegleiste 35 und den Schenkeln 34 ein Hohlraum 38 angeordnet ist. Dieser Hohlraum 38 dient der Aufnahme von Klebemitteln, die vor dem Zusammenfügen benachbarter Wandelemente 21 in die Aufnahme 33 eingefügt werden. Es ist aber auch denkbar, daß die Klebemittel erst nach dem Zusammenfügen benachbarter Wandelemente 21 von einer Schmalseite der Wandelemente 21 in den Hohlraum 38 eingefügt werden.

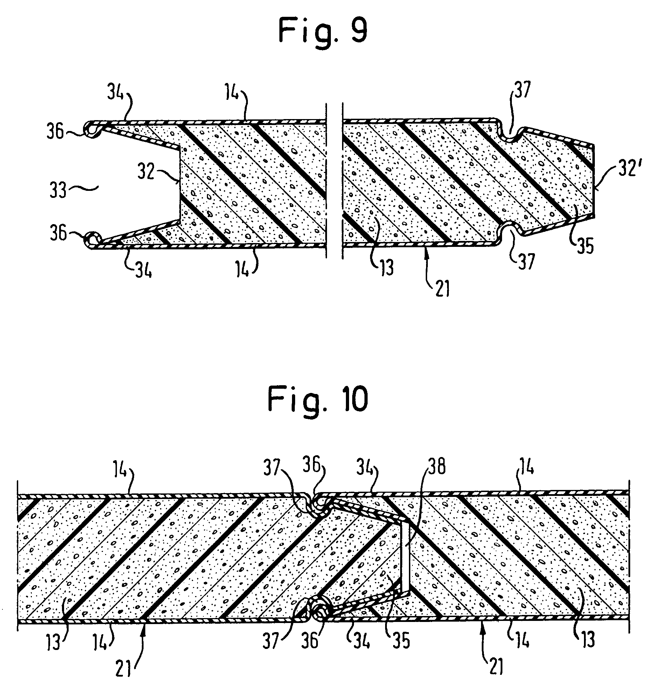

Das in den Figuren 9 und 10 zweite Ausführungsbeispiel der Wandelemente 21 weist die Merkmale des zuvor beschriebenen ersten Ausführungsbeispiels auf und hat als einzigen Unterschied, daß die Stegleiste 35 und Aufnahme 33 im Querschnitt im wesentlichen v-förmig ausgebildet sind, welches sich beim Zusammenbau einer Wand positiv darstellt, d.h. das Fügen der Elemente erfolgt noch problemloser als bei der Ausführungsform gemäß Fig. 7 und 8. Ferner wird der Schenkel 34 durch die Hinterwanderung des PU-Schaumes bzw. der Kernplatte 13 zusätzlich ausgesteift.

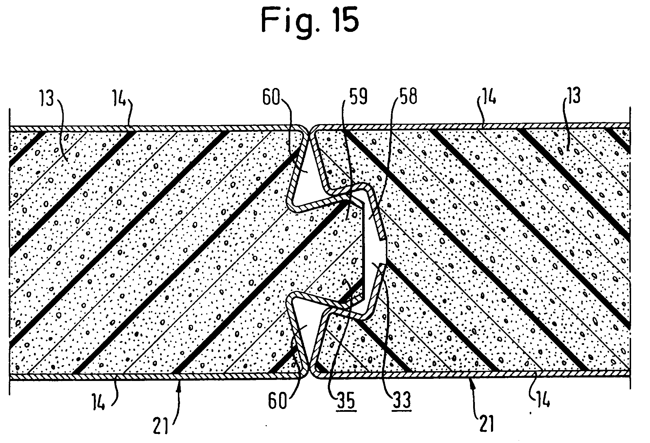

Bei dem in Fig. 15 dargestellten dritten Ausführungsbeispiel sind die Wandelemente 21 ebenfalls mit korrespondierenden Verbindungselementen in Form einer Schnappverbindung ausgestattet.

Wie in den beiden ersten Ausführungsbeispielen, bestehen auch bei dem dritten Ausführungsbeispiel gemäß Fig. 15 die Wandelemente 21 jeweils aus einer Kernplatte 13 aus Schaumstoff, die auf beiden Seiten mit einer Abdeckplatte 14, vorzugsweise aus Metallblech, armiert ist. Die Aufnahme 33 des einen Wandelementes 21 ist bei diesem Ausführungsbeispiel als durchlaufende, hinterschnittene Nut 58 ausgebildet, in die die Stegleiste 35 des anderen Wandelementes 21 mit einem verbreiterten Kopfteil 59 eingreift. Die Anordnung ist dabei derart getroffen, daß das Kopfteil 59 in die Hinterschneidung der Nut 58 einschnappt und auf diese Weise die Schnappverbindung herstellt.

Wie aus Fig. 15 hervorgeht, sind die Abdeckplatten 14 jeweils derart in den Bereich der hinterschnittenen Nut 58 bzw. in den Bereich der Stegleiste 35 hineingezogen, daß sie überwiegend die Wandung der Nut 58 bzw. der Stegleiste 35 einschließlich Kopfteil 59 bilden. Das besondere dabei ist, daß die Gestaltung derart gewählt ist, daß sowohl die Nut 58 als auch die Stegleiste 35 durch einfaches Abkanten der Abdeckplatten gebildet werden. Aufwendige walztechnische Verfahren zur Herstellung der Nut und der Stegleiste sind somit nicht erforderlich.

Im Falle der Ausführungsform nach Fig. 15 sind die Abdeckplatten 14 im Bereich des Stoßes der Wandelemente jeweils um mehr als 90° abgekantet. Dadurch werden im Stoßbereich Hohlräume 60 gebildet, die zur Aufnahme von Klebemitteln dienen.

Ein weiterer Hohlraum zur Aufnahme von Klebemitteln ist im Bereich des Grundes der Nut 58 vorgesehen. Dieser Hohlraum wird durch ein Abkanten der Abdeckplatten 14 im Bereich des Nutengrundes im Anschluß an die Hinterschneidung um nur 90° gebildet.

Die Wandelemente 21 für die Seitenwände 8 sind mit den Wandelementen 21 für die Decke 12 und den Bodenwandelementen 20 verschraubt, vernietet oder verklebt. Zwischen den Wandelementen 21 für die Seitenwände 8 und den Wandelementen 21 für die Decke 12 und zwischen den Wandelementen 21 für die Seitenwände 8 und den Bodenwandelementen 20 sind zur Vergrößerung der Festigkeit Profilleisten 39 angeordnet, die im Querschnitt rechtwinklig ausgebildet sind (Vgl. Figur 2).

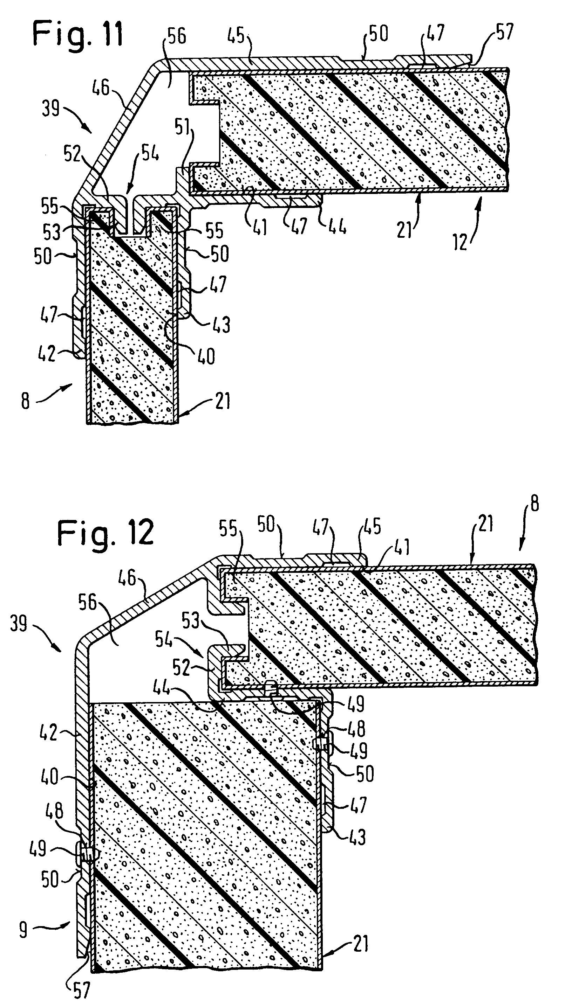

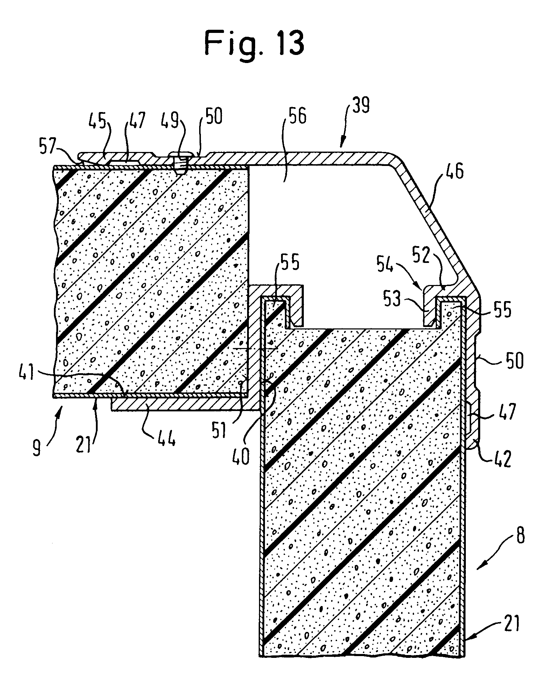

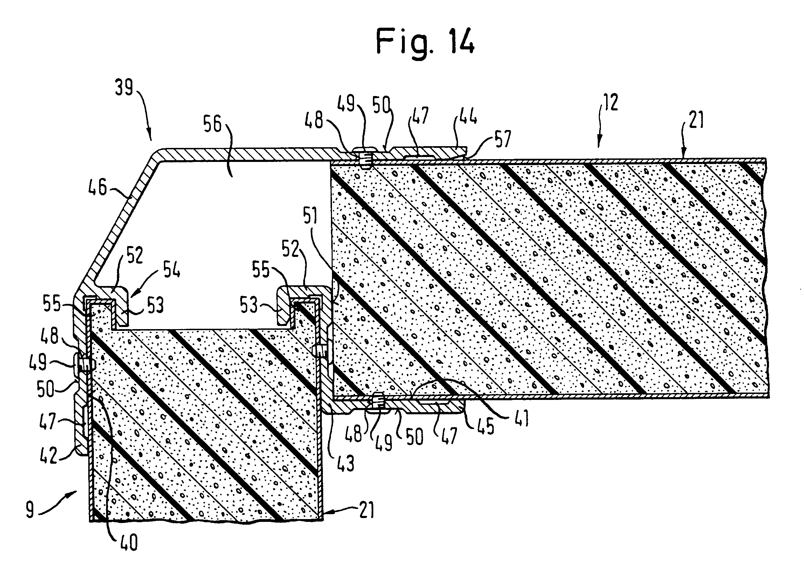

In den Figuren 11 bis 14 sind verschiedene Profilleisten 39 dargestellt, die zur Verbindung der Wandelemente 21 für die Seitenwände 8 und der Wandelemente 21 für die Decke 12 sowie der Wandelemente 21 für die Seitenwände 8 und der Wandelemente 21 der Vorder- oder Stirnwand 9 verwendet werden. Die Profilleiste 39 weist zwei im wesentlichen u-förmig ausgebildete Aufnahmen 40, 41 mit Schenkeln 42, 43, 44 und 45 auf. Die Aufnahmen 40, 41 sind l-förmig zueinander angeordnet und über einen Steg 46 miteinander verbunden. Der Steg 46 erstreckt sich hierbei unter einem Winkel zur Aufnahmeöffnung der Aufnahmen 40, 41 und ist an den auf den Außenseiten des Kofferaufbaus 7 aufliegenden Schenkeln 42, 45 schräg verlaufend angeordnet.

In die erste Aufnahme 40 sind die nebeneinander angeordneten, eine Wand 8 bildenden Wandelemente 21 eingesteckt. Die Wandelemente 21, welche die Decke 12 bilden, sind in die zweite Aufnahme 41 eingesteckt. In der Figur 11 ist ein erstes Ausführungsbeispiel dargestellt, bei der der Abstand der Schenkel 42, 43 der Aufnahme 40 für die Wandelemente 21 der Wände 8, 9 gleich groß ist wie der Abstand der Schenkel 44, 45 der Aufnahme 41 für die Wandelemente 21 der Decke 12.

Eine alternative Ausgestaltung ist in der Figur 12 dargestellt, in der der Abstand der Schenkel 42, 43 und 44, 45 der beiden Aufnahmen 40 und 41 unterschiedlich bemessen ist.

Wie aus den Figuren 11 bis 13 erkennbar ist, sind die auf den die Außenseiten des Kofferaufbaus bildenden Flächen der Wandelemente 21 aufliegenden Schenkel 42, 45 länger ausgebildet als die auf den die Innenseiten des Kofferaufbaus 7 bildenden Flächen der Wandelemente 21 aufliegenden Schenkel 43, 44. Darüberhinaus weisen die Schenkel 42, 43, 44, 45 auf ihren den Wandelementen 21 zugewandten Flächen Ausnehmungen 47 auf, die mit Klebemitteln befüllbar sind. Eine weitere Befestigungsmöglichkeit zwischen den Wandelementen 21 und der Profilleiste 39 wird dadurch erzielt, daß die Schenkel 42, 43, 44, 45 Bohrungen 48 haben, in welche Schrauben 49 gesteckt sind (vgl. Figuren 12 bis 14). Die Bohrungen 48 sind hierbei in Einsenkungen 50 in den Schenkeln 42, 43, 44, 45 angeordnet.

Zur lagegenauen Fixierung der Wandelemente 21 in den Aufnahmen 40, 41 sind in den Aufnahmen 40, 41 Anschläge 51 angeordnet. Die Anschläge 51 können hierbei Teil eines Schenkels 42, 43, 44, 45 sein.

Als weiteres Fixierungs- und Befestigungsmittel sind in den Aufnahmen 40, 41 zwischen den Schenkeln 42, 43, 44, 45 im wesentlichen l-förmig ausgebildete, zwei Stege 52, 53 aufweisende Winkelelemente 54 angeordnet. Der Steg 52 eines Winkelelementes 54 verläuft hierbei rechtwinklig zu den Schenkeln 42, 43 und ist an den Schenkeln 42 bzw. 43 befestigt. Der zweite Steg 53 verläuft im wesentlichen parallel zu den Schenkeln 42, 43, um Fixierungsvorrichtungen zu bilden, die mit korrespondierenden Zungen 55 zusammenwirken, die an den parallel zu den Profilleisten 39 angeordneten Schmalflächen der Wandelemente 21 angeordnet sind. Die beiden Stege 52, 53 umgreifen die Zungen 55, so daß die Profilleiste 39 paßgenau und spielfrei auf den Wandelementen 21 aufgesetzt werden kann.

Ein zwischen den Aufnahmen 40, 41 von dem Steg 46 abgedeckter Hohlraum 56 ist mit Profilschaumstücken ausgefüllt. Es ist aber auch denkbar, daß dieser Hohlraum 56 nach der Montage des Kofferaufbaus 7 ausgeschäumt wird. Schließlich weisen die Schenkel 42, 43, 44, 45 teilweise an ihren freien Enden und an den den Aufnahmen 40, 41 zugewandten Flächen Abschrägungen 57 auf, die ein vereinfachtes Einführen der Wandelemente 21 in die Profilleiste 39 ermöglichen. Um einen Kofferaufbau mit einem möglichst geringen Gewicht zu erhalten, sind die Profilleisten 39 aus Aluminium gefertigt. Es ist aber auch denkbar, Profilleisten aus einem Kunststoff oder einem andreen Leichtmetall zu verwenden.

Die Herstellung eines Kofferaufbaues gemäß Figur 1 mit dem zuvor beschriebenen Bausatz erfolgt dadurch, daß in einem ersten Schritt der aus den Längsträgern 15 und den Querträgern 16 bestehende Grundrahmen 6 vormontiert auf dem Fahrzeugrahmen 5 befestigt wird. Die Befestigung des Grundrahmens 6 auf dem Fahrzeugrahmen erfolgt dadurch, daß der Grundrahmen 6 mit den Konsolen 19 am Fahrzeugrahmen 5 verschraubt wird. Anschließend werden die Bodenwandelemente 20 auf dem Grundrahmen derart ausgelegt, daß eine Verbindung zwischen benachbarten Bodenwandelementen 20 entsteht, wie sie in der Figur 5 dargestellt ist. Demzufolge wird ein erstes Bodenwandelement 20 auf den Grundrahmen 6 aufgelegt und mit den Schrauben 25 am Längsträger 15 des Grundrahmens 6 verschraubt. Anschließend wird ein nächstes Bodenwandelement 20 mit seiner korrespondierenden Kante an das bereits befestigte Bodenwandelement 20 angelegt und ebenfalls auch mit einer Schraube 25 am Längsträger 15 des Grundrahmens 6 verschraubt. Zur Erhöhung der Festigkeit und zur Verbesserung der Abdichtung zwischen den Bodenwandelementen 21 wird an den Fügestellen zwischen benachbarten Bodenwandelementen 20 ein Klebemittel auf den Ansatz 29 und die korrespondierende Einsenkung 30 sowie auf die den Zapfen 31 bzw. die korrespondierende Öffnung aufhaltende Seite der Profilleiste 22 aufgetragen. Nachdem der Boden 11 vollständig auf dem Grundrahmen 6 befestigt ist, wird ein erstes Wandelement 21 an dem Boden 11 befestigt. Die Befestigung dieses Wandelementes 21 am Boden 11 erfolgt durch Verkleben, Verschrauben und/oder Vernieten. Es werden dann im Anschluß die weiteren Wandelemente 21 am Boden 11 befestigt, wobei jeweils das nächste Wandelement 21 mit seiner Stegleiste 35 in die Ausnehmung 33 des vorhergehend montierten Wandelementes 21 eingeschoben wird. Die Profilleiste 39 wird am Boden 11 ebenfalls verklebt und/oder vernietet.

Nachdem in der Art beide Seitenwände 8 und die Stirnwand 9 montiert sind, wird die Decke 12 ebenfalls aus Wandelementen 21 auf den Seitenwänden 8 und der Stirnwand 9 montiert. Auch hierbei erfolgt die Befestigung der Wandelemente 21 der Decke 12 an den Wandelementen 21 der Seitenwände 8 und der Stirnwand 9 durch Verschrauben, Vernieten oder Verkleben unter Verwendung von Profilleisten 39.

Es kann hierbei vorgesehen sein, daß vor der Montage der Decke 12 ein Trägersystem, beispielsweise aus Kunststoff oder Leichtmetall auf die Seitenwände 8 und die Stirnwand 9 aufgelegt wird, welches zu einer höheren Stabilität der Deckenkonstruktion führt.

Abschließend werden an den dafür vorgesehenen Stellen, also beispielsweise am hinteren Ende des Kofferaufbaues oder an einer oder beiden Seiten des Kofferaufbaues Portale und Türen montiert oder Rolltorportale eingesetzt.

## Patentansprüche

1. Bausatz zur Herstellung eines Kofferaufbaues, insbesondere für Lastkraftfahrzeuge, Anhänger, Sattelauflieger oder dergleichen in Klebetechnik, umfassend:
- Wandelemente (21) für die Wände (8,9) und Decken (12) mit einer maximalen Breite von etwa. 1,5 m,
- Bodenwandelemente (20) mit einer maximalen Breite von etwa 1,5 m und
- Einfassprofile zur Klebeverbindung der aus den Wandelementen (21) bzw. Bodenwandelementen (20) gebildeten Wand-, Decken- oder Bodeneinheit.

2. Bausatz nach Anspruch 1, gekennzeichnet durch einen Grundrahmen (6), der aus zusammensetzbaren Längsträgern (15), Querträgern (16) und Befestigungsvorrichtungen besteht.

3. Bausatz nach Anspruch 2, dadurch gekennzeichnet, daß die Befestigungsvorrichtungen als Konsolen (19) ausgebildet sind, die an den Längsträgern (15) und/oder an den Querträgern (16) anschraubbar sind und eine Verbindung zwischen Fahrzeugrahmen (5) und Grundrahmen (6) herstellen.

4. Bausatz nach Anspruch 2, dadurch gekennezeichnet, daß in den Längsträgern (15) und/oder Querträgern (16) mindestens eine Lochreihe (17) mit einer Vielzahl von in gleichen Abständen angeordneten Löchern (18) angeordnet ist.

5. Bausatz nach Anspruch 1, dadurch gekennzeichnet, daß die Bodenwandelemente (20) an ihren gegenüberliegenden Kanten korrespondierende Befestigungsvorrichtungen haben.

6. Bausatz nach Anspruch 5, dadurch gekennzeichnet, daß die Bodenwandelemente (20) als Sandwichplatten ausgebildet sind, die aus zumindest einer Abdeckplatte (14) bestehen, die auf einer Kernplatte (13) befestigt ist.

7. Bausatz nach Anspruch 6, dadurch gekennzeichnet, daß die Bodenwandelemente (20) an ihren gegenüberliegenden Kanten jeweils eine Profilleiste (22) aufweisen die vorzugsweise aus einem Kunststoff oder Holz besteht.

8. Bausatz nach Anspruch 6 oder 7, dadurch gekennzeichnet, daß die Abdeckplatte (14) derart auf der Kernplatte (13) angeordnet ist, daß die Abdeckplatte (14) die erste Kante der Kernplatte (13) und/ oder der Profilleiste (22) überragt und im Bereich der gegenüberliegenden zweiten Kante der Kernplatte (13) derart zurückgesetzt ist, daß sie zusammen mit der Kernplatte (13) und/ oder der Profilleiste (22) einen Absatz (23) bildet.

9. Bausatz nach einem der Ansprüche 5 bis 8, dadurch gekennzeichnet, daß die Bodenwandelemente (20) Einsenkungen (28) für Befestigungselemente haben.

10. Bausatz nach Anspruch 9, dadurch gekennzeichnet, daß die Einsenkungen (28) in den Profilleisten (22) angeordnet sind.

11. Bausatz nach Anspruch 9, dadurch gekennzeichnet, daß die Befestigungselemente als Schrauben (25) mit einem hammerartigen Kopf (27) ausgebildet sind.

12. Bausatz nach einem der Ansprüche 9 bis 11, dadurch gekennzeichnet, daß die Einsenkungen (28) eine Tiefe aufweisen, die der Dicke des hammerartigen Kopfes (27) der Schrauben (25) entspricht.

13. Bausatz nach einem der Ansprüche 5 bis 12, dadurch gekennzeichnet, daß die Bodenwandelemente (20) mittels der Schrauben (25) an dem Grundrahmen (6) befestigbar sind.

14. Bausatz nach einem der Ansprüche 5 bis 13, dadurch gekennzeichnet, daß die Bodenwandelemente (20) an einer dem Absatz (23) gegenüberliegenden Kante der Unterseite der Kernplatte (13) und/oder der Profilleiste (22) einen plattenartigen Ansatz (29) und an ihrer gegenüberliegenden Kante eine mit dem Ansatz (29) korrespondierende Einsenkung (30) haben.

15. Bausatz nach einem der Ansprüche 5 bis 14, dadurch gekennzeichnet, daß die Bodenwandelemente (20) im Flügelbereich an einer Längsseite zumindest einen Zapfen (31) und an ihrer gegenüberliegenden Längsseite eine mit dem Zapfen (31) korrespondierende Öffnung haben, wobei der Zapfen (31) bzw. die Öffnung zwischen der Abdeckplatte (14) und dem Bord (29) angeordnet sind.

16. Bausatz nach Anspruch 1, dadurch gekennzeichnet, daß die Wandelemente (21) mittels einer Nut/Feder-Anordnung miteinander verbindbar sind.

17. Bausatz nach Anspruch 1, dadurch gekennzeichnet, daß die Wandelemente (21) für die Wände (8,9) und die Decke (12) an ihren gegenüberliegenden Längskanten (32,32') korrespondierende Verbindungselemente aufweisen, die eine Schnappverbindung zweier benachbarter Wandelemente (21) ermöglichen.

18. Bausatz nach Anspruch 16, dadurch gekennzeichnet, daß jedes Wandelement (21) an einer Längskante (32) eine Aufnahme (33) mit zwei Schenkeln (34) und an der gegenüberliegenden Längskante (32') eine mit der Aufnahme korrespondierende Stegleiste (35) hat.

19. Bausatz nach Anspruch 18, dadurch gekennzeichnet, daß die Aufnahme (33) im Querschnitt U- oder trapezförmig ausgebildet ist.

20. Bausatz nach Anspruch 18, dadurch gekennzeichnet, daß die Stegleiste (35) durch eine Verringerung der Dicke des Wandelementes (21) gebildet ist.

21. Bausatz nach Anspruch 18, dadurch gekennzeichnet, daß die Schenkel (34) elastisch sind und vorzugsweise aus dem Material der Abdeckplatte (14) des Wandelementes (21) bestehen.

22. Bausatz nach Anspruch 18, dadurch gekennzeichnet, daß die Schenkel (34) an ihren freien Enden eine Wulst (36) haben, welche in entsprechende Ausnehmungen (37) der Stegleiste (35) einschnappen.

23. Bausatz nach Anspruch 18, dadurch gekennzeichnet, daß sich die Stegleiste (35) zumindest in einem Teilbereich ihres freien Endes verjüngt, so daß zwischen der Stegleiste (35) und den Schenkeln (34) ein Hohlraum (38) angeordnet ist.

24. Bausatz nach Anspruch 18, dadurch gekennzeichnet, daß die Stegleiste (35) und die Aufnahme (33) im Querschnitt im wesentlichen V-förmig ausgebildet sind.

25. Bausatz nach Anspruch 16 bis 18, dadurch gekennzeichnet, daß die Aufnahme (33) als durchlaufende, hinterschnittene Nut (58) ausgebildet ist und die Stegleiste (35) einen in die Hinterschneidung eingreifenden, verbreiterten Kopfteil 59 aufweist.

26. Bausatz nach Anspruch 25, mit Wandelementen, bei denen auf eine Kernplatte (13) zu beiden Seiten eine Abdeckplatte (14) aufgesetzt ist, dadurch gekennzeichnet, daß die Abdeckplatten (14) derart in dem Bereich der hinterschnittenen Nut (58) sowie in den Bereich der Stegleiste (35) hineingezogen ist, daß sie zumindest teilweise die Wandung der Nut (58) und die Wandung der Stegleiste (35) einschließlich Kopfteil (59) bilden.

27. Bausatz nach Anspruch 25 und 26, dadurch gekennzeichnet, daß die Abdeckplatten (14) zur Bildung der Nut (58) und der Stegleiste (35) abgekantet sind.

28. Bausatz nach Anspruch 1, dadurch gekennzeichnet, daß die Wandelemente (21) für die Wände (8,9) mit den Wandelementen (21) für die Decke (12) und den Bodenwandelementen (20) verschraubt, vernietet oder verklebt sind.

29. Bausatz nach Anspruch 1, dadurch gekennzeichnet, daß zwischen den Wandelementen (21) für die Wände (8,9) und den Wandelementen (21) für die Decke (12) und/oder zwischen den Wandelementen (21) für die Wände (8,9) und den Bodenwandelementen (20) Profilleisten (39) angeordnet sind.

30. Bausatz nach Anspruch 29, dadurch gekennzeichnet, daß die Profilleisten (39) zwei im wesentlichen u-förmig ausgebildete und l-förmig zueinander angeordnete Aufnahmen (40, 41) mit Schenkeln (42, 43, 44, 45) haben, wobei in die erste Aufnahme (40) die Wandelemente (21) für die Wände (8, 9) und in die zweite Aufnahme (41) die Wandelemente (21) für die Decke (12) einsteckbar sind.

31. Bausatz nach Anspruch 30, dadurch gekennzeichnet, daß der Abstand der Schenkel (42, 43) der Aufnahme (40) für die Wandelemente (21) der Wand (8) geringer ist, als der Abstand der Schenkel (44, 45) der Aufnahme (41) für die Wandelemente (21) der Decke (12) und/oder der Wand (9).

32. Bausatz nach Anspruch 30, dadurch gekennzeichnet, daß der Abstand der Schenkel (43, 43) der Aufnahme (40) für die Wandelemente (21) der Wand (8) gleich groß ist, wie der Abstand der Schenkel (44, 45) der Aufnahme (41) für die Wandelemente (21) der Decke (12) und/oder der Wand (9).

33. Bausatz nach Anspruch 30, dadurch gekennzeichnet, daß die auf den die Außenseiten des Kofferaufbaus (7) bildenden Flächen der Wandelemente (21) aufliegenden Schenkel (42, 45) länger ausgebildet sind, als die auf den die Innenseiten des Kofferaufbaus (7) bildenden Flächen der Wandelemente (21) aufliegenden Schenkel (43, 44).

34. Bausatz nach Anspruch 30, dadurch gekennzeichnet, daß die Schenkel (42, 43, 44, 45) auf ihren den Wandelementen (21) zugewandten Flächen Ausnehmungen (47) haben, die mit Klebemitteln befüllbar sind.

35. Bausatz nach Anspruch 30, dadurch gekennzeichnet, daß die Schenkel (42, 43, 44, 45) Bohrungen (48) aufweisen, in welche Befestigungsmittel, wie beispielsweise Schrauben (49), Niete oder dergleichen steckbar sind.

36. Bausatz nach Anspruch 35, dadurch gekennzeichnet, daß die Bohrungen (48) in Einsenkungen (50) in den Schenkeln (42, 43, 44, 45) angeordnet sind.

37. Bausatz nach Anspruch 30, dadurch gekennzeichnet, daß in den Aufnahmen (40, 41) zwischen den Schenkeln (42, 43, 44, 45) Anschläge (51) angeordnet sind.

38. Bausatz nach Anspruch 30, dadurch gekennzeichnet, daß in den Aufnahmen (40, 41) zwischen den Schenkeln (42, 43, 44, 45) im wesentlichen l-förmig ausgebildete, zwei Stege (52, 53) aufweisende Winkelelemente (54) angeordnet sind, wobei ein Steg (52) rechtwinklig zu den Schenkeln (42, 43, 44, 45) und ein Steg (53) im wesentlichen parallel zu den Schenkeln (42, 43, 44, 45) verläuft, um Fixierunsvorrichtungen zu bilden, die mit korrespondierenden Zungen (55) zusammenwirken, die an den parallel zu den Profilleisten (39) angeordneten Schmalflächen der Wandelemente (21) angeordnet sind.

39. Bausatz nach Anspruch 30, dadurch gekennzeichnet, daß die Aufnahmen (40, 41) über einen außen liegenden Steg (39) miteinander verbunden sind, der an den auf den Außenseiten des Kofferaufbaus (7) aufliegenden Schenkeln (42, 45) unter einem Winkel angrenzt, schräg verläuft und einen Hohlraum (56) zwischen den Aufnahmen (40, 41) abdeckt.

40. Bausatz nach Anspruch 39, dadurch gekennzeichnet, daß der Hohlraum (56) ausgeschäumt ist.

41. Bausatz nach Anspruch 39, dadurch gekennzeichnet, daß der Hohlraum (56) mit Profilschaumstücken ausgefüllt ist.

42. Bausatz nach Anspruch 30, dadurch gekennzeichnet, daß die Schenkel (42, 43, 44, 45) an ihren freien Enden und an den den Aufnahmen (40, 41) zugewandten Flächen eine Abschrägung (57) haben.

43. Bausatz nach Anspruch 29, dadurch gekennzeichent, daß die Profilleisten (39) aus Aluminium bestehen.

44. Verfahren zur Herstellung eines Kofferaufbaues, insbesondere für Lastkraftfahrzeuge, Anhänger, Sattelauflieger oder dergleichen, bei dem die Wand-, Decken- und/oder Bodeneinheiten jeweils aus Wand-, Decken- bzw. Bodenwandelementen hergestellt und unter Verwendung von Einfassprofilen in Klebetechnik zusammengebaut werden,
**dadurch gekennzeichnet,** daß
- kleinflächige Bodenwandelemte (20) nacheinander zur Bildung der Bodeneinheit zusammengereiht,
- danach kleinflächige Wandelemente (21) zur Bildung der Seiten- und Stirnwandeinheit aufgesetzt und mit den Bodenwandelementen verbunden,
- im Anschluß daran kleinflächige Deckenwandelemente aufgelegt,
- und abschließend einstückige oder mehrteilige Tür- oder Rolltorportale eingesetzt werden.

45. Verfahren nach Anspruch 44, dadurch gekennzeichnet, daß die Bodenwandelemente (20) auf einen Grundrahmen (6) befestigt werden, der mit dem Fahrzeugrahmen (5) verbunden wird.

46. Verfahren nach Anspruch 45, dadurch gekennzeichnet, daß die Bodenwandelemente (20) mit dem Grundrahmen (6) verschraubt werden.
